# FASCICULE DE BREVET EUROPEEN

(11) **EP 3 470 264 B1**
(45) Date de publication et mention de la délivrance du brevet: **29.07.2020**
(21) Numéro de dépôt: 18194520.5
(22) Date de dépôt: 14.09.2018
(51) Int. Cl.: B60P 3/20, F25D 29/00

(54) **CARROSSERIE FRIGORIFIQUE DE VÉHICULE ROUTIER DE TRANSPORT DE MARCHANDISES MUNIE D'UN DISPOSITIF DE FERMETURE, ET PROCÉDÉ D'AVERTISSEMENT ASSOCIÉ**
KÜHLKAROSSERIE EINES STRASSENFAHRZEUGS FÜR DEN WARENTRANSPORT, DIE MIT EINER VERSCHLUSSVORRICHTUNG AUSGESTATTET IST, UND ENTSPRECHENDES WARNVERFAHREN
REFRIGERATING BODY OF A ROAD VEHICLE FOR TRANSPORTING GOODS PROVIDED WITH A CLOSING DEVICE, AND ASSOCIATED WARNING METHOD

(30) Priorité: 11.10.2017 FR 1759509
(43) Date de publication de la demande: 17.04.2019
(73) Titulaire: Jean Chereau SAS, 50220 Ducey (FR)
(72) Inventeur: BUISINE, François, 35140 SAINT AUBIN DU CORMIER (FR); LEROUX, François, 50300 Saint Senier Sous Avranches (FR)
(74) Mandataire: Casalonga

(56) Documents cités:
- EP-A1- 3 091 318
- US-A1- 2003 132 841
- US-A1- 2007 214 812

## Description

La présente invention concerne le domaine des carrosseries frigorifiques destinées à être montées par exemple sur les châssis de véhicules routiers de transport de marchandises tels que des camions, des semi-remorques, des remorques ou des porteurs.

L'espace de chargement intérieur d'une carrosserie est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre une porte à un ou plusieurs battants ou encore un rideau coulissant.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

La carrosserie frigorifique peut comprendre en outre au moins une cloison de séparation articulée à rotation sous le pavillon de sorte à pouvoir délimiter, à l'intérieur de l'espace de chargement, plusieurs compartiments pouvant être maintenus à des températures différentes. On parle alors généralement de fonctionnement « multi-températures » de la carrosserie frigorifique.

Pour assurer un transport des marchandises à la ou aux températures requises, la carrosserie frigorifique est équipée de plusieurs sondes ou capteurs de température montés à l'intérieur de l'espace de chargement. Ainsi, il est possible de procéder au pilotage du fonctionnement de la machine frigorifique en fonction de l'évolution des températures mesurées. Pour plus de détail sur le transport de marchandises à température contrôlée, on pourra se référer au document EP-A1-3-091 318.

Par ailleurs, lors du transport frigorifique, les températures de l'air mesurées par ces capteurs sont enregistrées pour assurer la traçabilité des marchandises et le suivi de la chaine du froid.

Lors d'une livraison, après l'ouverture de la porte à battant(s) ou du rideau coulissant qui permet l'accès à l'espace de chargement de la carrosserie, la température de l'air à l'intérieur de cet espace peut augmenter et n'être régulée que lorsque la porte ou le rideau est à nouveau refermé.

Si la porte ou le rideau arrière de la carrosserie reste ouvert pendant une durée trop importante, cela peut avoir un impact sur la température des marchandises stockées à l'intérieur de l'espace de chargement et qui restent encore à livrer.

Actuellement, il n'existe aucune solution permettant de remédier à cet inconvénient.

On comprend donc qu'il existe un besoin, dans le transport de marchandises sous température contrôlée, de limiter au maximum l'impact d'une livraison sur la température des marchandises restant à livrer ultérieurement.

L'invention a pour objet une carrosserie frigorifique de véhicule routier de transport de marchandises comprenant un espace de chargement intérieur, une machine frigorifique pour contrôler la température à l'intérieur dudit espace de chargement en fonction d'au moins une température de consigne, et un dispositif de fermeture d'un accès audit espace de chargement intérieur.

La carrosserie comprend également au moins un moyen détecteur de position pour détecter une position ouverte ou une position fermée du dispositif de fermeture, au moins un moyen de détermination de la température de l'air ou des marchandises à l'intérieur de l'espace de chargement, et au moins un moyen d'émission de signaux d'avertissement visibles et/ou audibles.

La carrosserie comprend encore une unité de traitement électronique comprenant des moyens de calcul de la différence de température en valeur absolue entre la température déterminée de l'air ou des marchandises par ledit moyen de détermination et ladite température de consigne sélectionnée, et un comparateur de ladite différence de température avec au moins une température seuil prédéterminée.

Selon une caractéristique générale, l'unité de traitement électronique est apte à déclencher une temporisation d'une durée T₁ prédéterminée lorsque ladite différence de température est supérieure à ladite température seuil prédéterminée.

Selon une autre caractéristique générale, l'unité de traitement électronique est apte à commander le déclenchement dudit moyen d'émission des signaux d'avertissement à l'échéance de la durée T₁ de temporisation prédéterminée et en présence d'un signal du moyen détecteur de position représentatif de la position ouverte du dispositif de fermeture.

Ainsi, il devient possible de signaler à l'utilisateur de la carrosserie frigorifique lorsque le dispositif de fermeture de l'espace de chargement doit être refermé rapidement de sorte à respecter les températures de transport prescrites par les clients des marchandises. Cela permet donc de garantir que l'ouverture de l'espace de chargement intérieur de la carrosserie lors de la livraison d'un client n'a pas d'impact sur la température des produits restant à livrer du ou des clients suivants.

En conséquence, les tournées peuvent être assurées en respectant la chaîne du froid, du premier au dernier client, et ce quelle que soit la température extérieure.

La carrosserie comprend en outre une unité de commande apte à commander le fonctionnement de la machine frigorifique, l'unité de traitement électronique étant distincte de l'unité de commande.

Ainsi, l'unité de traitement électronique peut ainsi intégrée à la carrosserie et être connectée au moyen détecteur de position du dispositif de fermeture et au moins de détermination de la température de l'air, avant ou après montage de la machine frigorifique sur la carrosserie. On simplifie ainsi les opérations de fabrication et d'assemblage de la carrosserie.

Avantageusement, l'unité de traitement électronique est reliée à l'unité de commande de la machine frigorifique par une liaison de données. L'unité de commande peut dans ces conditions piloter le fonctionnement de la machine frigorifique en fonction de données transmises par l'unité de traitement électronique.

Dans un mode de réalisation particulier, l'unité de traitement électronique est apte à attribuer la valeur de la durée T₁ de temporisation en fonction de ladite température de consigne de la machine frigorifique.

Alternativement ou en combinaison, l'unité de traitement électronique peut également être apte à attribuer la valeur de la température seuil en fonction de ladite température de consigne.

Ainsi, la valeur de la durée T₁ de temporisation et/ou la valeur de la température seuil sont variables selon la température de consigne sélectionnée. Ceci permet de tenir compte des types de marchandises transportés tels que par exemple les produits frais (viandes, poissons, laitages, etc.) ou les produits surgelés.

Avantageusement, l'unité de traitement électronique peut comprendre des moyens de mémorisation pour stocker différentes valeurs prédéterminées de la durée T₁ de temporisation et différentes valeurs prédéterminées de la température seuil. Ces valeurs prédéterminées de la durée T₁ de temporisation et de la température seuil sont spécifiques à des valeurs prédéfinies de la température de consigne de la machine frigorifique. L'unité de traitement électronique peut ainsi attribuer à la durée T₁ de temporisation une des valeurs prédéterminées selon la température de consigne sélectionnée, et attribuer à la température seuil une des valeurs prédéterminées selon ladite température de consigne.

Dans un autre mode de réalisation, il reste cependant possible de prévoir une durée T₁ de temporisation qui soit fixe et pouvant par exemple être décompté à partir de l'ouverture du dispositif de fermeture, et/ou une valeur de la température seuil qui soit fixe également.

Selon une conception particulière, le dispositif de fermeture comprend un rideau de fermeture et un moyen d'entrainement dudit rideau entre la position ouverte et la position fermée. Le moyen d'entrainement peut par exemple être un moteur électrique ou encore un vérin pneumatique. On parle alors de rideau à ouverture électrique ou à ouverture électropneumatique.

Avec une telle conception, l'unité de traitement électronique peut être apte à émettre un signal de commande pour le passage automatique du rideau de fermeture dans la position fermée après émission des signaux d'avertissement visibles et/ou audibles. De préférence, l'unité de traitement électronique est apte à commander le fonctionnement dudit moyen d'entrainement à l'échéance d'une durée T₂ de temporisation prédéterminée. La ou les valeurs prédéterminées de la durée T₂ de temporisation peuvent être stockées à l'intérieur des moyens de mémorisation.

Dans un mode de réalisation particulier, le dispositif de fermeture comprend une unité de contrôle électronique pour le pilotage du déplacement du rideau de fermeture qui est reliée à l'unité de traitement électronique. Le signal de commande émis par l'unité de traitement pour la fermeture automatique du rideau peut être délivré à l'unité de contrôle électronique.

Dans ce mode, l'unité de contrôle électronique est distincte de l'unité de traitement. Ces deux unités peuvent être couplées ou reliées entre elles par une connexion ou liaison de données par exemple de type filaire ou radioélectrique ou encore par l'intermédiaire de bus de communication. Les signaux émis par le moyen détecteur de position peuvent être transmis à l'unité de contrôle électronique. L'unité de traitement reçoit de l'unité de contrôle électronique du dispositif de fermeture les données relatives à la position ouverte ou fermée du rideau de fermeture qui est détectée par le moyen détecteur. Cela permet d'utiliser le moyen détecteur déjà existant qui est prévu pour le pilotage du déplacement du rideau de fermeture. Autrement dit, la fonction d'avertissement de l'utilisateur de la carrosserie ne nécessite pas dans ce cas l'utilisation de moyen détecteur spécifique. En variante, indépendamment de la présence ou non de l'unité de contrôle électronique propre au dispositif de fermeture, il reste cependant possible de prévoir un moyen détecteur spécifique pour réaliser cette fonction d'avertissement de l'utilisateur. Dans ce cas, ce moyen détecteur spécifique est relié à l'unité de traitement électronique.

Dans un autre mode de réalisation alternatif, la carrosserie peut comprendre une unique unité pour obtenir le déclenchement des signaux d'avertissement et le pilotage du déplacement du rideau de fermeture.

Selon une autre conception du dispositif de fermeture, celui-ci peut comprendre un rideau de fermeture à ouverture manuelle, c'est-à-dire dépourvu de moteur électrique ou de vérin pneumatique mais équipé d'un ressort cylindrique pré-taré qui équilibre le rideau en limitant les efforts à l'ouverture et à la fermeture. Dans une autre conception du dispositif de fermeture, celui-ci peut comprendre une porte à un ou plusieurs battants articulés à rotation. Avec une telle conception, le moyen détecteur de position peut par exemple comprendre un capteur fixé dans la penne prévue pour le verrouillage du ou des battants.

De préférence, la carrosserie peut comprendre des moyens de visualisation pour l'affichage de valeurs prédéfinies de la température de consigne de la machine frigorifique, et des moyens de sélection pour sélectionner au moins une des valeurs de la température de consigne affichées. Avantageusement, les moyens de sélection sont affichables sur les moyens de visualisation.

De préférence, le moyen de détermination comprend un capteur de température apte à délivrer des signaux de température représentatifs de la température de l'air ou de la température des marchandises à l'intérieur de l'espace de chargement.

L'invention concerne encore un procédé d'avertissement de l'état ouvert d'un dispositif de fermeture d'un accès à l'espace de chargement intérieur d'une carrosserie frigorifique de véhicule routier de transport de marchandises munie d'une machine frigorifique pour contrôler la température à l'intérieur dudit espace de chargement à partir d'au moins une température de consigne. Le procédé comprend les étapes suivantes :
- détecter la position ouverte ou fermée du dispositif de fermeture,
- déterminer la température de l'air à l'intérieur de l'espace de chargement ou la température des marchandises à l'intérieur dudit espace,
- calculer la différence de température en valeur absolue entre la température déterminée de l'air, ou la température déterminée des marchandises, et ladite température de consigne lorsque le dispositif de fermeture est en position ouverte,
- comparer ladite différence de température avec au moins une température seuil prédéterminée,
- déclencher une temporisation lorsque ladite différence de température est supérieure à ladite température seuil prédéterminée, et
- émettre des signaux d'avertissement visibles et/ou audibles à l'échéance de la durée de temporisation prédéterminée dans le cas où il est détecté que le dispositif de fermeture est en position ouverte à ladite échéance.

L'étape de détection de la position du dispositif de fermeture peut être effectuée avant ou après l'étape de détermination de la température de l'air ou des marchandises.

Dans un mode de mise en œuvre, le procédé peut comprendre l'étape : attribuer la valeur de la durée de temporisation selon la température de consigne de la machine frigorifique. Le procédé peut également comprendre l'étape : attribuer la valeur de la température seuil selon la température de consigne.

Dans un mode de mise en œuvre particulier, le procédé peut comprendre l'étape : commander la fermeture automatique du dispositif de fermeture après émission des signaux d'avertissement.

La présente invention sera mieux comprise à l'étude de la description détaillée d'un mode de réalisation pris à titre d'exemple nullement limitatif et illustré par les dessins annexés, sur lesquels :
- la figure 1 est une vue schématique en coupe longitudinale de l'intérieur d'une carrosserie frigorifique selon un exemple de réalisation de l'invention, et
- la figure 2 illustre schématiquement une unité de traitement électronique de la carrosserie frigorifique de la figure 1.

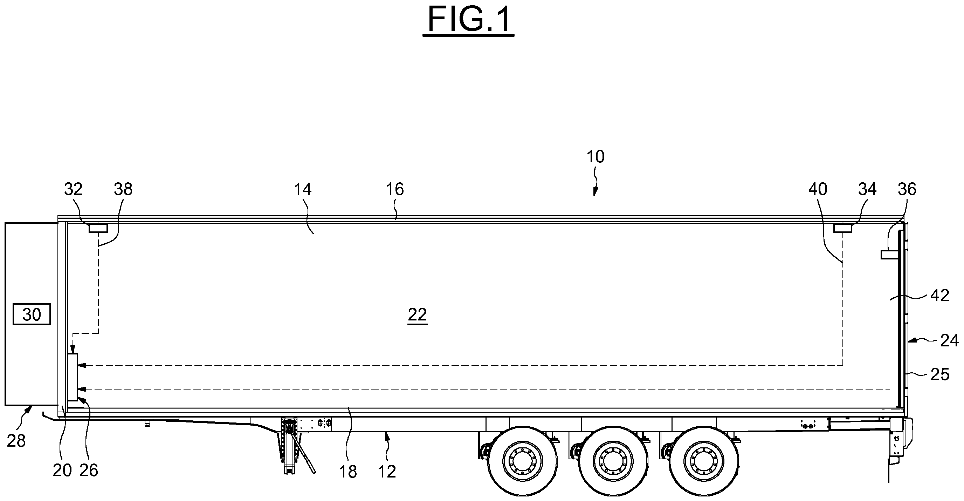

Sur la figure 1, on a représenté une carrosserie frigorifique, référencée 10 dans son ensemble, montée sur un châssis 12 de véhicule de transport routier s'étendant longitudinalement et soutenu par des roues.

La carrosserie 10 comprend deux flancs 14 verticaux opposés s'étendant longitudinalement, un plafond ou pavillon 16, un plancher 18, une face avant 20 et un cadre arrière nommé custode (non visible sur la figure) qui sont assemblés entre eux pour délimiter un espace de chargement 22 intérieur.

La carrosserie 10 comprend également un dispositif 24 de fermeture d'une ouverture ou accès arrière à l'espace de chargement 22. Le dispositif 24 de fermeture est mobile entre une position de fermeture de l'accès arrière et au moins une position d'ouverture. Dans l'exemple de réalisation décrit, le dispositif 24 de fermeture comprend un rideau de fermeture 25 coulissant et un moyen d'entrainement (non représenté) dudit rideau entre la position ouverte et la position fermée. Le rideau de fermeture 25 comprend une pluralité de panneaux transversaux articulés entre eux et guidés latéralement dans des rails du cadre arrière de la carrosserie par l'intermédiaire de galets. Le moyen d'entrainement peut par exemple être un moteur électrique. Le moyen d'entrainement peut être monté à l'intérieur d'une traverse supérieure du cadre arrière de la carrosserie. Alternativement, le dispositif 24 de fermeture peut comprendre une porte à un ou plusieurs battants articulés à rotation.

Comme cela sera décrit plus en détail par la suite, la carrosserie 10 comprend également une unité de traitement 26 électronique permettant le déclenchement de signaux d'avertissement visibles et/ou audibles lorsque le dispositif 24 de fermeture reste trop longtemps dans une position d'ouverture dans des conditions de fonctionnement prédéterminées.

La carrosserie 10 comprend encore un groupe ou machine frigorifique 28 pour envoyer de l'air à température régulée à l'intérieur de l'espace de chargement 22. De manière connue en soi, l'air peut être extrait de l'espace de chargement 22 par la machine frigorifique 28 et, après mise à température, être réinjecté dans cet espace. La machine frigorifique 28 peut par exemple être une machine frigorifique à moteur thermique, une machine frigorifique à moteur électrique, une machine frigorifique hybride ou encore une machine frigorifique fonctionnant sur le principe de la cryogénie, par exemple à l'azote ou au dioxyde de carbone.

La carrosserie 10 comprend également une unité de commande 30 apte à commander le fonctionnement de la machine frigorifique 28 pour contrôler la température à l'intérieur de l'espace de chargement 22. Dans l'exemple de réalisation illustré, l'unité de commande 30 est montée à l'intérieur du bloc carter de la machine frigorifique. La machine frigorifique 28 est fixée ici sur la face avant 20 de la carrosserie à l'extérieur de l'espace de chargement 22. En variante, il est possible de monter la machine frigorifique 28 sur une des autres parois de la carrosserie 10, par exemple sur le pavillon 16 ou sur le plancher 18.

La carrosserie 10 comprend encore des capteurs 32, 34 de température montés à l'intérieur de l'espace de chargement 22. Les capteurs 32, 34 permettent d'obtenir des mesures de la température de l'air à l'intérieur de l'espace de chargement 22. Les capteurs 32, 34 sont ici au nombre de deux. Alternativement, il est possible de prévoir un nombre différent de capteurs de température. Dans l'exemple de réalisation illustré, les capteurs 32, 34 sont fixés sur le pavillon 16. En variante, il est également possible de prévoir une autre disposition des capteurs 32, 34. Par exemple, le capteur 32 peut être fixé à la face avant 20 et le capteur 34 peut être fixé sur un des flancs 14.

Les capteurs 32, 34 de température peuvent par exemple être du type CTN (Coefficient de Température Négatif). Alternativement, les capteurs peuvent être de type CTP (Coefficient de Température Positif) ou de type PT100. Les capteurs 32, 34 sont des thermistances dont la résistance varie en fonction de la température de l'air à l'intérieur de l'espace de chargement 22. Dans une autre variante, d'autres types de capteurs peuvent encore être utilisés pour mesurer la température de l'air à l'intérieur de l'espace de chargement 22, par exemple des capteurs de température numériques.

La carrosserie 10 comprend également un moyen détecteur de position 36 pour détecter une position ouverte ou une position fermée du dispositif 24 de fermeture. Le moyen détecteur de position 36 peut par exemple comprendre deux capteurs magnétiques fixés sur un des flancs 14 de la carrosserie. Chaque capteur magnétique sert de capteur de fin de course et permet la détection de la position ouverte ou fermée du rideau de fermeture 25 grâce à la présence d'aimants disposés sur les panneaux du rideau. Alternativement, il est possible de prévoir d'autres types de moyens détecteurs de position, par exemple un contacteur fixé sur le rideau de fermeture pour assurer une continuité électrique uniquement lorsque le rideau est dans la position fermée.

Les signaux de température émis par les capteurs 32, 34 et les signaux de position émis par le moyen détecteur de position 36 sont transmis à l'unité de traitement 26 électronique. Les signaux de température émis par les capteurs 32, 34 sont représentatifs de la température de l'air à l'intérieur de l'espace de chargement 22. Les signaux de position émis par le moyen détecteur de position 36 sont représentatifs de la position ouverte ou fermée du dispositif 24 de fermeture. Les capteurs 32, 34 et le moyen détecteur de position 36 sont reliés à l'unité de traitement 26 respectivement par l'intermédiaire de connexions 38, 40, 42 illustrées schématiquement en pointillés. Les connexions 38 à 42 peuvent par exemple être de type filaire ou radioélectrique ou encore être réalisées par l'intermédiaire de bus de communication.

Dans l'exemple de réalisation illustré, l'unité de traitement 26 est fixée sur la face avant 20 de la carrosserie du côté de l'espace de chargement 22. Alternativement, d'autres montages de l'unité de traitement 26 sont possibles. Cette unité pourrait par exemple être encastrée dans le plancher 18 de la carrosserie. L'unité 26 de traitement peut se présenter sous la forme d'une carte de circuit imprimé.

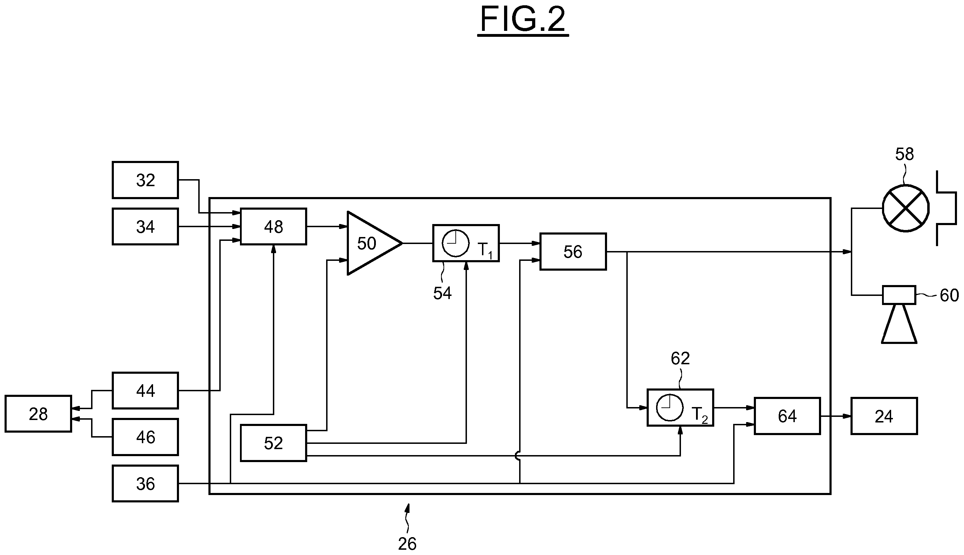

Comme cela est illustré à la figure 2, la carrosserie 10 comprend des moyens de sélection 44, par exemple un clavier, qui sont reliés à l'unité de traitement 26 et des moyens de visualisation 46, par exemple un afficheur. Les moyens de sélection 44 peuvent par exemple être des touches de boutons poussoir, ou un clavier physique ou encore un clavier numérique s'affichant sur les moyens de visualisation 46. Les moyens de sélection 44 permettent de sélectionner parmi une liste de valeurs prédéfinies de la température de consigne T_{consigne} pour le fonctionnement de la machine frigorifique 28. Cette liste prédéfinie de de valeurs de la température de consigne T_{consigne} peut s'afficher et défiler sur les moyens de visualisation 46. Les moyens de sélection 44 sont actionnables par un utilisateur.

L'unité de traitement 26 électronique comprend des moyens de calcul 48 recevant en entrée les signaux émis par les capteurs 32, 34 ainsi qu'un signal correspondant à la température de consigne T_{consigne} sélectionnée via les moyens de sélection 44. Les moyens de calcul 48 reçoivent également en entrée le signal de position émis par le moyen détecteur de position 36.

Les moyens de calcul 48 sont programmés de façon à calculer, par exemple à intervalles de temps réguliers, la différence de température en valeur absolue entre la température de l'air mesurée par le capteur de température 32 et la température de consigne sélectionnée pour le fonctionnement de la machine frigorifique 28, soit |ΔT| = |T_{mesurée} - T_{consigne}|. Les moyens de calcul 48 calculent la différence de température en valeur absolue |ΔT| uniquement en présence d'un signal représentatif de la position ouverte du dispositif de fermeture émis par le moyen détecteur de position 36.

L'unité de traitement 26 électronique comprend également un comparateur 50 recevant sur une première entrée la différence de température en valeur absolue |ΔT| calculée par les moyens de calcul 48, et sur une seconde entrée la valeur d'une température seuil prédéterminée issue de moyens de mémorisation 52 de l'unité de traitement 26.

Les moyens de mémorisation 52 stockent différentes valeurs prédéterminées de la température seuil qui sont spécifiques aux valeurs prédéfinies de la température de consigne T_{consigne} de la machine frigorifique 28. Les moyens de mémorisation 52 peuvent par exemple être une mémoire non volatile. L'unité de traitement 26 électronique est apte à attribuer la valeur de la température seuil prédéterminée en fonction de la température de consigne T_{consigne} sélectionnée via les moyens de sélection 44. Cette valeur de la température seuil est extraite des moyens de mémorisation 52 et est transmise au comparateur 50. Le comparateur 50 émet sur sa sortie un signal d'activation (un « 1 » logique) si la différence de température en valeur absolue |ΔT| calculée par les moyens de calcul 48 est supérieure à la valeur de la température seuil prédéterminée issue des moyens de mémorisation 52.

L'unité de traitement 26 électronique comprend encore un premier circuit de temporisation 54 recevant en entrée le signal de sortie du comparateur 50 et la valeur prédéterminée d'une durée T₁ de temporisation issue des moyens de mémorisation 52. En effet, les moyens de mémorisation 52 stockent également différentes valeurs prédéterminées de la durée T₁ de temporisation qui sont spécifiques aux valeurs prédéfinies de la température de consigne T_{consigne} de la machine frigorifique 28.

Lorsque le signal d'activation est émis par le comparateur 50, l'unité de traitement 26 électronique est apte à attribuer, à partir des moyens de mémorisation 52, la valeur de la durée T₁ de temporisation en fonction de la température de consigne T_{consigne} sélectionnée via les moyens de sélection 44.

A titre indicatif, l'abaque suivant peut être enregistré dans les moyens de mémorisation 52 pour l'attribution par l'unité de traitement 26 électronique de la valeur de la température seuil et de la valeur de la durée T₁ de temporisation qui sont spécifiques à la température de consigne T_{consigne} sélectionnée par l'utilisateur.

| Température de consigne (T_{consigne}) | Température seuil prédéterminée | Durée T₁ de temporisation prédéterminée |
|---|---|---|
| Entre -25°C et -20°C | 7°C | 5 minutes |
| Entre -20°C et -15°C | 7°C | 5 minutes |
| Entre -15°C et -10°C | 7°C | 3 minutes |
| Entre -10°C et -5°C | 5°C | 1 minute |
| Entre -5°C et 0°C | 3°C | 1 minute |
| Entre 0°C et 5°C | 3°C | 1 minute |
| Entre 5°C et 10°C | 3°C | 3 minutes |
| Entre 10°C et 15°C | 5°C | 5 minutes |
| Entre 15°C et 20°C | 5°C | 5 minutes |

Après attribution de la durée T₁ de temporisation, l'unité de traitement 26 électronique déclenche la temporisation puis émet à sa sortie un signal d'alarme (un « 1 » logique) lorsque cette durée T₁ de temporisation est atteinte.

L'unité de traitement 26 électronique comprend encore une porte logique ET, référencée 56, qui reçoit en entrée le signal d'alarme issu du circuit de temporisation 54 et le signal de position émis par le moyen détecteur de position 36. Dans ces conditions, on comprend qu'un signal est émis en sortie de la porte ET 56 à l'échéance de la durée T₁ de temporisation et en présence d'un signal représentatif de la position ouverte du dispositif de fermeture émis par le moyen détecteur de position 36.

Lorsqu'un signal est émis en sortie de la porte ET 56, l'unité de traitement 26 électronique émet un signal de commande pour le déclenchement d'au moins un moyen d'émission de signaux d'avertissement visibles et/ou audibles pour alerter l'utilisateur de la carrosserie 10. Le moyen d'émission peut par exemple être le plafonnier électrique 58 de la carrosserie 10 prévu pour l'éclairage de l'espace de chargement 22 qui dans ce cas peut par exemple être commandé par l'unité de traitement 26 pour scintiller, et/ou un buzzer ou alarme 60 prévue spécifiquement à l'intérieur de l'espace de chargement 22, et/ou un voyant d'alarme situé au niveau du tableau de bord du véhicule routier, etc.

Au contraire, si avant que la durée T₁ de temporisation ne soit atteinte, le dispositif de fermeture 24 de l'accès arrière à l'espace de chargement intérieur repasse dans la position fermée, aucun signal n'est émis en sortie de la porte ET 56 et aucun signal d'avertissement n'est émis à l'attention de l'utilisateur de la carrosserie.

Dans l'exemple de réalisation illustré, l'unité de traitement 26 électronique comprend encore un deuxième circuit de temporisation 62 recevant en entrée le signal de sortie de la porte ET 56 et la valeur d'une durée T₂ de temporisation issue des moyens de mémorisation 52. Les moyens de mémorisation 52 stockent en outre différentes valeurs prédéterminées de la durée T₂ de temporisation qui sont distinctes des valeurs de la durée T₁ de temporisation et spécifiques aux valeurs prédéfinies de la température de consigne T_{consigne} de la machine frigorifique 28.

Lorsqu'un signal est émis en sortie de la porte ET 56, l'unité de traitement 26 électronique est apte à attribuer, à partir des moyens de mémorisation 52, la valeur de la durée T₂ de temporisation en fonction de la température de consigne T_{consigne} sélectionnée via les moyens de sélection 44. L'unité de traitement 26 électronique déclenche la temporisation puis émet à sa sortie un signal de fermeture (un « 1 » logique) lorsque cette durée T₂ de temporisation est atteinte.

L'unité de traitement 26 électronique comprend encore une autre porte logique ET, référencée 64, qui reçoit en entrée le signal de fermeture issu du deuxième circuit de temporisation 62 et le signal de position émis par le moyen détecteur de position 36. Un signal est émis en sortie de la porte ET 64 à l'échéance de la durée T₂ de temporisation et en présence d'un signal représentatif de la position ouverte du dispositif de fermeture émis par le moyen détecteur de position 36.

Lorsqu'un signal est émis en sortie de la porte ET 64, l'unité de traitement 26 électronique émet un signal de commande pour commander le fonctionnement du moyen d'entrainement du rideau 25 du dispositif de fermeture et obtenir le passage automatique en position fermée. Au contraire, si avant que la durée T₂ de temporisation ne soit atteinte, le dispositif de fermeture 24 repasse dans la position fermée, aucun signal n'est émis en sortie de la porte ET 64.

Dans l'exemple de réalisation illustré, l'unité de traitement 26 électronique permet donc de commander la fermeture automatique du dispositif de fermeture 24 après l'émission des signaux d'avertissement si l'utilisateur de la carrosserie n'a toujours pas procédé de lui-même à la fermeture dudit dispositif. En variante, il reste possible de prévoir une unité de traitement 26 électronique dépourvue du deuxième circuit de temporisation 62 et de la porte ET 64.

Dans l'exemple de réalisation illustré, l'unité de traitement 26 électronique est distincte et indépendante de l'unité de commande 30 de la machine frigorifique qui assure le pilotage de la température à l'intérieur de l'espace de chargement intérieur 22. Pour assurer ce pilotage, les signaux issus des capteurs 32, 34 peuvent également être transmis à l'unité de commande 30 de la machine frigorifique.

En variante, il pourrait être possible de prévoir une interface reliant l'unité de commande 30 propre à la machine frigorifique à l'unité de traitement 26 par une liaison de données. Dans ce cas, l'unité de commande 30 peut commander le fonctionnement de la machine frigorifique 28 en fonction des températures transmises par l'unité de traitement 26. Ces températures peuvent être les températures mesurées par les capteurs 32, 34. Dans une autre variante, il pourrait encore être possible de prévoir sur une unique carte de circuit imprimé à la fois l'unité de commande 30 de la machine frigorifique et l'unité de traitement 26.

Dans l'exemple de réalisation illustré, le dispositif de fermeture de la carrosserie permet d'ouvrir ou de fermer un accès arrière à l'espace de chargement intérieur. Alternativement ou en combinaison, il est possible de prévoir un dispositif de fermeture permettant d'ouvrir ou de fermer un accès latéral à l'espace de chargement intérieur prévu au niveau d'un des flancs longitudinaux de la carrosserie.

Dans l'exemple de réalisation illustré, la carrosserie frigorifique est dépourvue de cloison de séparation articulée à rotation sous le pavillon de sorte à pouvoir délimiter, à l'intérieur de l'espace de chargement, plusieurs compartiments pouvant être maintenus à des températures différentes. En variante, la carrosserie peut être équipée d'une ou de plusieurs cloisons de ce type. Dans ce cas, un capteur de température est de préférence associé à chaque compartiment et une température de consigne est sélectionnée pour chaque compartiment. L'unité de traitement électronique peut alors déclencher l'émission de signaux d'avertissement à l'attention de l'utilisateur dès que la température devient critique dans l'un des compartiments délimités à l'intérieur de l'espace de chargement.

Dans l'exemple de réalisation décrit, la carrosserie comprend au moins un capteur pour mesurer la température de l'air à l'intérieur de l'espace de chargement. On ne sort pas du cadre de la présente invention lorsque la carrosserie comprend, en remplacement ou en combinaison, un ou des capteurs pour déterminer la température à cœur des marchandises transportées, par exemple des sondes à inertie, ou encore un moyen d'estimation de la température des marchandises à partir de la température de l'air mesurée.

## Revendications

1. Carrosserie frigorifique de véhicule routier de transport de marchandises comprenant :
- un espace de chargement (22) intérieur,
- une machine frigorifique (28) pour contrôler la température à l'intérieur dudit espace de chargement en fonction d'au moins une température de consigne,
- une unité de commande (30) apte à commander le fonctionnement de la machine frigorifique (28)
- un dispositif de fermeture (24) d'un accès audit espace de chargement intérieur,
- au moins un moyen détecteur de position (36) pour détecter une position ouverte ou une position fermée du dispositif de fermeture (24),
- au moins un moyen de détermination (32) de la température de l'air ou des marchandises à l'intérieur de l'espace de chargement, et
- au moins un moyen d'émission (58, 60) de signaux d'avertissement visibles et/ou audibles, **caractérisée en ce que** la carrosserie frigorifique comprend en outre :
- une unité de traitement (26) électronique qui est distincte de l'unité de commande (30) et qui comprend des moyens de calcul (48) de la différence de température en valeur absolue entre la température déterminée de l'air ou des marchandises et ladite température de consigne, et un comparateur (50) de ladite différence de température avec au moins une température seuil prédéterminée,
- l'unité de traitement (26) électronique étant apte à déclencher une temporisation d'une durée T₁ prédéterminée lorsque ladite différence de température est supérieure à ladite température seuil prédéterminée, et
- l'unité de traitement (26) électronique étant apte à commander le déclenchement dudit moyen d'émission (58, 60) des signaux d'avertissement à l'échéance de la durée T₁ de temporisation prédéterminée et en présence d'un signal du moyen détecteur de position (36) représentatif de la position ouverte du dispositif de fermeture (24).

2. Carrosserie selon la revendication 1, dans laquelle l'unité de traitement (26) électronique est reliée à l'unité de commande (30) de la machine frigorifique (28) par une liaison de données.

3. Carrosserie selon la revendication 1 ou 2, dans laquelle l'unité de traitement (26) électronique est apte à attribuer la valeur de la durée T₁ de temporisation en fonction de ladite température de consigne.

4. Carrosserie selon l'une quelconque des revendications précédentes, dans laquelle l'unité de traitement (26) électronique est apte à attribuer la valeur de la température seuil en fonction de ladite température de consigne.

5. Carrosserie selon la revendication 4, dans laquelle l'unité de traitement (26) électronique comprend des moyens de mémorisation (52) pour stocker différentes valeurs prédéterminées de la durée T₁ de temporisation et différentes valeurs prédéterminées de la température seuil qui sont spécifiques à des valeurs prédéfinies de la température de consigne de la machine frigorifique (28).

6. Carrosserie selon l'une quelconque des revendications précédentes, dans laquelle le dispositif de fermeture (24) comprend un rideau de fermeture (25) et un moyen d'entrainement dudit rideau entre la position ouverte et la position fermée, l'unité de traitement (26) électronique étant apte à émettre un signal de commande pour le passage automatique du rideau de fermeture (25) dans la position fermée après émission des signaux d'avertissement visibles et/ou audibles.

7. Carrosserie selon la revendication 6, dans laquelle l'unité de traitement (26) électronique est apte à commander le fonctionnement dudit moyen d'entrainement à l'échéance d'une durée T₂ de temporisation prédéterminée.

8. Carrosserie selon l'une quelconque des revendications précédentes, dans laquelle le moyen de détermination (32) comprend un capteur de température apte à délivrer des signaux de température représentatifs de la température de l'air ou de la température des marchandises à l'intérieur de l'espace de chargement (22).

9. Carrosserie selon l'une quelconque des revendications précédentes, comprenant des moyens de visualisation (46) pour l'affichage de valeurs prédéfinies de la température de consigne de la machine frigorifique (28) et des moyens de sélection (44) pour sélectionner au moins une des valeurs de la température de consigne affichées.

10. Procédé d'avertissement de l'état ouvert d'un dispositif de fermeture d'un accès à l'espace de chargement intérieur d'une carrosserie frigorifique de véhicule routier de transport de marchandises selon l'une quelconque des revendications précédentes, le procédé comprenant les étapes suivantes :
- détecter la position ouverte ou fermée du dispositif de fermeture,
- déterminer la température de l'air à l'intérieur de l'espace de chargement ou la température des marchandises à l'intérieur dudit espace,
- calculer la différence de température en valeur absolue entre la température déterminée de l'air, ou la température déterminée des marchandises, et ladite température de consigne lorsque le dispositif de fermeture est en position ouverte,
- comparer ladite différence de température avec au moins une température seuil prédéterminée,
- déclencher une temporisation lorsque ladite différence de température est supérieure à ladite température seuil prédéterminée, et
- émettre des signaux d'avertissement visibles et/ou audibles à l'échéance de la durée de temporisation prédéterminée dans le cas où il est détecté que le dispositif de fermeture est en position ouverte.

11. Procédé selon la revendication 10, comprenant l'étape : attribuer la valeur de la durée de temporisation selon la température de consigne.

12. Procédé selon la revendication 10 ou 11, comprenant l'étape : attribuer la valeur de la température seuil selon la température de consigne.

13. Procédé selon l'une quelconque des revendications 10 à 12, comprenant l'étape : commander la fermeture automatique du dispositif de fermeture après émission des signaux d'avertissement.

## Patentansprüche

1. Kühlaufbau eines Straßenfahrzeugs für den Warentransport, umfassend:
- einen Innenladeraum (22),
- ein Kühlaggregat (28) zum Kontrollieren der Temperatur im Inneren des Laderaumes in Abhängigkeit von mindestens einer Solltemperatur,
- eine Steuereinheit (30), die imstande ist den Betrieb des Kühlaggregats (28) zu steuern
- eine Schließvorrichtung (24) für einen Zugang zum Innenladeraum,
- mindestens ein Positionsdetektionsmittel (36) zum Detektieren einer offenen Position oder einer geschlossenen Position der Schließvorrichtung (24),
- mindestens ein Bestimmungsmittel (32) der Temperatur der Luft oder der Waren im Inneren des Laderaumes, und
- mindestens ein Ausgabemittel (58, 60) für sichtbare und/oder hörbare Warnsignale, **dadurch gekennzeichnet, dass** der Kühlaufbau weiter Folgendes umfasst:
- eine elektronische Verarbeitungseinheit (26), die sich von der Steuereinheit (30) unterscheidet und die Berechnungsmittel (48) für den Temperaturunterschied in einem absoluten Wert zwischen der bestimmten Temperatur der Luft oder der Waren und der Solltemperatur umfasst, und einen Vergleicher (50) des Temperaturunterschieds mit mindestens einer vorbestimmten Schwellentemperatur,
- wobei die elektronische Verarbeitungseinheit (26) imstande ist, eine Verzögerung einer vorbestimmten Dauer T₁ auszulösen, wenn der Temperaturunterschied größer als die vorbestimmte Schwellentemperatur ist, und
- die elektronische Verarbeitungseinheit (26) imstande ist, die Auslösung des Ausgabemittels (58, 60) für die Warnsignale bei Ablauf der vorbestimmten Verzögerungsdauer T₁, und bei Anliegen eines Signals des Positionsdetektionsmittels (36), das repräsentativ für die offene Position der Schließvorrichtung (24) ist, zu steuern.

2. Aufbau nach Anspruch 1, wobei die elektronische Verarbeitungseinheit (26) über eine Datenverbindung mit der Steuereinheit (30) des Kühlaggregats (28) verbunden ist.

3. Aufbau nach Anspruch 1 oder 2, wobei die elektronische Verarbeitungseinheit (26) imstande ist, den Wert der Verzögerungsdauer T₁ in Abhängigkeit von der Solltemperatur zuzuweisen.

4. Aufbau nach einem der vorstehenden Ansprüche, wobei die elektronische Verarbeitungseinheit (26) imstande ist, den Wert der Schwellentemperatur in Abhängigkeit von der Solltemperatur zuzuweisen.

5. Aufbau nach Anspruch 4, wobei die elektronische Verarbeitungseinheit (26) Speichermittel (52) zum Ablegen verschiedener vorbestimmter Werte der Verzögerungsdauer T₁ verschiedener vorbestimmter Werte der Schwellentemperatur umfasst, die spezifisch für vordefinierte Werte der Solltemperatur des Kühlaggregats (28) sind.

6. Aufbau nach einem der vorstehenden Ansprüche, wobei die Schließvorrichtung (24) einen Schließvorhang (25) und ein Mittel zum Antreiben des Vorhanges zwischen der offenen Position und der geschlossenen Position umfasst, wobei die elektronische Verarbeitungseinheit (26) imstande ist, ein Steuersignal für den automatischen Übergang des Schließvorhanges (25) in die geschlossene Position nach dem Ausgeben der sichtbaren und/oder hörbaren Warnsignale auszugeben.

7. Aufbau nach Anspruch 6, wobei die elektronische Verarbeitungseinheit (26) imstande ist, den Betrieb des Mittels zum Antreiben bei Ablauf einer vorbestimmten Verzögerungsdauer T₂ zu steuern.

8. Aufbau nach einem der vorstehenden Ansprüche, wobei das Bestimmungsmittel (32) einen Temperatursensor umfasst, der imstande ist, repräsentative Temperatursignale für die Temperatur der Luft oder die Temperatur der Waren im Inneren des Laderaumes (22) abzugeben.

9. Aufbau nach einem der vorstehenden Ansprüche, Visualisierungsmittel (46) zur Anzeige vordefinierter Werte für die Solltemperatur des Kühlaggregats (28) und Auswahlmittel (44) zum Auswählen mindestens eines der angezeigten Werte für die Solltemperatur umfassend.

10. Verfahren zur Warnung vor dem offenen Zustand einer Schließvorrichtung für einen Zugang zum Innenladeraum eines Kühlaufbaus eines Straßenfahrzeugs für den Warentransport nach einem der vorstehenden Ansprüche, wobei das Verfahren die folgenden Schritte umfasst:
- Detektieren der offenen oder geschlossenen Position der Schließvorrichtung,
- Bestimmen der Temperatur der Luft im Inneren des Laderaumes oder der Temperatur der Waren im Inneren des Raumes,
- Berechnen des Temperaturunterschieds in einem absoluten Wert zwischen der bestimmten Temperatur der Luft oder der Waren und der Solltemperatur, wenn die Schließvorrichtung in der offenen Position ist,
- Vergleichen des Temperaturunterschieds mit mindestens einer vorbestimmten Schwellentemperatur,
- Auslösen einer Verzögerung, wenn der Temperaturunterschied größer als die vorbestimmte Schwellentemperatur ist, und
- Ausgeben sichtbarer und/oder hörbarer Warnsignale bei Ablauf der vorbestimmten Verzögerungsdauer für den Fall, dass detektiert wird, dass die Schließvorrichtung in der offenen Position ist.

11. Verfahren nach Anspruch 10, umfassend den Schritt: Zuweisen des Wertes für die Verzögerungsdauer entsprechend der Solltemperatur.

12. Verfahren nach Anspruch 10 oder 11, umfassend den Schritt: Zuweisen des Wertes für die Schwellentemperatur entsprechend der Solltemperatur.

13. Verfahren nach einem der Ansprüche 10 bis 12, umfassend den Schritt: Steuern des automatischen Schließens der Schließvorrichtung nach dem Ausgeben der Warnsignale.

## Claims

1. Refrigerating body of a road vehicle for transporting goods comprising:
- an internal loading area (22),
- a refrigerating machine (28) for controlling the temperature inside said loading area according to at least one target temperature,
- a control unit (30) suitable for controlling the operation of the refrigerating machine (28)
- a device (24) for closing of an access to said internal loading area,
- at least one position detecting means (36) for detecting an open position or a closed position of the closing device (24),
- at least one determination means (32) of the temperature of the air or the goods inside the loading area, and
- at least one means (58, 60) for emitting visible and/or audible warning signals, **characterised in that** the refrigerating body further comprises:
- an electronic processing unit (26) which is separate from the control unit (30) and which comprises means (48) for calculating the temperature difference in absolute value between the determined temperature of the air or the goods and said target temperature, and a comparator (50) of said temperature difference with at least one predetermined threshold temperature,
- the electronic processing unit (26) being suitable for activating a time delay of a predetermined duration T₁ when said temperature difference is greater than said predetermined threshold temperature, and
- the electronic processing unit (26) being suitable for controlling the activation of said means (58, 60) for emitting the warning signals when the predetermined time delay duration T₁ has elapsed and in the presence of a signal from the position detecting means (36) representative of the open position of the closing device (24).

2. Body according to claim 1, wherein the electronic processing unit (26) is connected to the control unit (30) of the refrigerating machine (28) by a data link.

3. Body according to claim 1 or 2, wherein the electronic processing unit (26) is suitable for allocating the value of the time delay duration T₁ according to said target temperature.

4. Body according to any one of the preceding claims, wherein the electronic processing unit (26) is suitable for allocating the value of the threshold temperature according to said target temperature.

5. Body according to claim 4, wherein the electronic processing unit (26) comprises storage means (52) for storing different predetermined values of the time delay duration T₁ and different predetermined values of the threshold temperature which are specific to predefined values of the target temperature of the refrigerating machine (28).

6. Body according to any one of the preceding claims, wherein the closing device (24) comprises a closing screen (25) and a means for driving said screen between the open position and the closed position, the electronic processing unit (26) being suitable for emitting a control signal for automatic switching of the closing screen (25) to the closed position after emission of the visible and/or audible warning signals.

7. Body according to claim 6, wherein the electronic processing unit (26) is suitable for controlling the operation of said driving means when a predetermined time delay duration T₂ has elapsed.

8. Body according to any one of the preceding claims, wherein the determination means (32) comprises a temperature sensor suitable for delivering temperature signals representative of the temperature of the air or the temperature of the goods inside the loading area (22).

9. Body according to any one of the preceding claims, comprising visual display means (46) for displaying predefined values of the target temperature of the refrigerating machine (28) and selection means (44) for selecting at least one of the target temperature values displayed.

10. Method for warning of the open status of a device for closing an access to the internal loading area of a refrigerating body of a road vehicle for transporting goods according to any one of the preceding claims, the method comprising the following steps:
- detecting the open or closed position of the closing device,
- determining the temperature of the air inside the loading area or the temperature of the goods inside said area,
- calculating the temperature difference in absolute value between the determined temperature of the air, or the determined temperature of the goods, and said target temperature when the closing device is in the open position,
- comparing said temperature difference with at least one predetermined threshold temperature,
- activating a time delay when said temperature difference is greater than said predetermined threshold temperature, and
- emitting visible and/or audible warning signals when the predetermined time delay duration has elapsed in the case where it is detected that the closing device is in the open position.

11. Method according to claim 10, comprising the step of: allocating the value of the time delay duration according to the target temperature.

12. Method according to claim 10 or 11, comprising the step of: allocating the value of the threshold temperature according to the target temperature.

13. Method according to any one of claims 10 to 12, comprising the step of: controlling the automatic closure of the closing device after emission of the warning signals.
